# EUROPÄISCHE PATENTSCHRIFT

(11) **EP 1 821 019 B1**
(45) Veröffentlichungstag und Bekanntmachung des Hinweises auf die Patenterteilung: **11.02.2009**
(21) Anmeldenummer: 06077240.7
(22) Anmeldetag: 27.12.2006
(51) Int. Cl.: F16L 13/14

(54) **Rohrverbindung**
Pipe connection
Raccord de tuyauterie

(30) Priorität: 17.02.2006 DE 102006008317
(43) Veröffentlichungstag der Anmeldung: 22.08.2007
(73) Patentinhaber: GEBERIT TECHNIK AG, 8645 Jona (CH)
(72) Erfinder: Speckemeyer, Jens, 45475 Mülheim a.d. Ruhr (DE)
(74) Vertreter: Meissner, Peter E.

(56) Entgegenhaltungen:
- WO-A-98/57086
- DE-A1- 10 054 367
- DE-A1-7102004 016 32
- DE-C1- 10 125 302
- DE-C1- 10 125 304
- DE-C1- 19 631 574
- DE-C1- 19 813 805
- DE-U1- 20 018 911
- DE-U1- 29 721 760
- DE-U1-6202005 005 26

## Beschreibung

Die Erfindung betrifft eine Rohrverbindung bestehend aus einem metallischen Pressfitting und einem darin einschiebbaren metallischen Leitungsrohr gemäß dem Oberbegriff des Patentanspruches 1.

Bekannte Rohrverbindungen mit einem Fitting aus Metall sind beispielsweise aus dem Lieferprogramm der Firma Mapress bekannt (s. Auszug aus dem Lieferprogramm "Mapress Pressfitting System", April 2001).

Hierin werden Pressfittinge dargestellt, die im Einschubbereich des Leitungsrohres einen wulstartig ausgebildeten sich nach außen erstreckenden verpressbaren Abschnitt aufweisen, in dem ein Dichtelement angeordnet ist. An den wulstartig ausgebildeten Abschnitt schließt sich zur medienzugewandten Seite ein zylindrischer Abschnitt an, mit einem Axialanschlag für das mit radialem Spiel darin einschiebbare Leitungsrohr.

Zur Herstellung der Rohrverbindung wird das Leitungsrohr bis zum axialen Anschlag eingeschoben und im Einschubbereich durch Verpressung im Dichtbereich und des unmittelbar angrenzenden Bereiches im zylindrischen Abschnitt mit dem Fitting gedichtet und axial gesichert.

Hierzu wird nach dem Einschub des Leitungsrohres ein Verpresswerkzeug angesetzt, das mindestens mit zwei das Presselement umfassenden Pressbacken versehen ist. Jede Pressbacke weist zwei voneinander beabstandete Pressstege und eine dazwischen liegende nutförmige Ausnehmung auf. Die nutförmige Ausnehmung der Pressbacke wird auf den Ringwulst aufgesetzt und durch Betätigen des Presswerkzeuges die Pressbacken aufeinanderzugefahren.

Einerseits wird zum Abdichten der Ringwulst einschließlich des darin eingelegten Dichtelementes radial gestaucht, andererseits wirkt zur Erzeugung einer axialen Sicherung das Presswerkzeug mit einem Presssteg auch auf den zylindrischen Abschnitt beim Schließen auf den Pressfitting ein.

Eine weitere Rohrverbindung ist z.B. aus dem Lieferprogramm der Firma Viega bekannt (Lieferprogramm "sanpress INOX mit SC- Contur, 1/03).

Bei dem hier dargestellten Pressfitting schließt sich an den Ringwulstabschnitt sowohl zur medienzugewandten wie auch zur medienabgewandten Seite ein zylindrisch ausgebildeter Abschnitt an, wobei neben der Radialverpressung des Ringwulstes zur axialen Sicherung der Verbindung beide Pressstege des Presswerkzeuges auf beide zylindrische Abschnitte des Überdeckungsbereiches einwirken.

Auf Seite 13 und 14 des Lieferprogramms von Mapress wird darauf hingewiesen, dass für eine sichere Pressverbindung die richtige Einschieblänge für das Leitungsrohr von wesentlicher Bedeutung ist. Dabei wird unter "richtiger Einschieblänge" verstanden, dass das Leitungsrohr vor dem Verpressen unter leichtem Drehen und gleichzeitigem Drücken in axialer Richtung bis zum durch die sickenartige Vertiefung des Pressfittings sich ergebenden Anschlag eingeschoben werden soll. Eine zuvor angebrachte Markierung auf dem Leitungsrohr dient dabei als Kontrolle.

Auf einer Baustelle erfolgt eine Leitungsrohrverlegung aus Gründen einer praktischen Arbeitsfolge aber nicht immer Schritt für Schritt, d.h. abmessen, abschneiden, entgraten, anzeichnen, einschieben und verpressen, sondern es werden gleichzeitig mehrere zu verbindende Leitungsrohrabschnitte vermessen und eingeschoben und anschließend alle Verbindungsstellen verpresst.

Bei dieser Arbeitsweise ist es nicht auszuschließen, dass die Vermessung insbesondere bei engen Raumverhältnissen, nicht vorgenommen wird und das möglicherweise zu kurz abgeschnittene Leitungsrohr nicht mehr voll in einen oder sogar zwei Pressfittings eingeschoben werden kann, und dass beim Ausrichten der Leitung das bereits eingeschobene Leitungsrohr an einer Stelle wieder ein Stück aus dem Pressfitting herausgezogen wird.

Da diese Rückverschiebung von außen nicht immer erkennbar ist, wenn beispielsweise die erforderliche Einschieblänge nicht ordnungsgemäß angezeichnet ist oder die Anzeichnung unvollständig ist (nicht sichtbare Rückseite), erfolgt trotzdem die Verpressung. Je nach Grad der Rückverschiebung kann eine solche nicht ordnungsgemäße Verpressstelle infolge der Bewegung der Leitung später möglicherweise zu Undichtigkeiten und ggf. auch zum Lösen der Verbindung, führen.

Andererseits ist es auch aus Praktikabilitätsgründen, z.B. bei senkrechter Leitungsverlegung, wünschenswert, dass ein von unten auf das Leitungsrohrende zur Verpressung aufgeschobener Fitting nicht wieder abgleitet.

Zur Lösung des geschilderten Problems ist vorgeschlagen worden, im Einschubbereich des Pressfittings ein weitgehend die axiale Rückbewegung des eingeschobenen Leitungsrohres verhinderndes Mittel anzuordnen, dessen lichte Weite im nicht belasteten Zustand kleiner ist als der toleranzmäßig kleinste sich ergebende Außendurchmesser des eingeschobenen Leitungsrohres (DE 101 25 304 C1, DE 101 25 302 C1, DE 100 54 367 A1, DE 198 13 805 C1, DE 196 31 574 C1, DE 297 21 760 U1).

Nachteilig bei den bekannten Lösungen ist, dass die Rückhaltemittel einerseits aufwändig in der Herstellung und andererseits innerhalb des Fittings montiert werden müssen. Dies kann z.B. bei kleinen Rohrdurchmessern sehr aufwändig sein.

Da diese Rückhaltemittel z.T. im medienführenden Bereich der Verbindung eingebaut werden, ist man beispielsweise bei Trinkwasserleitungen aus hygienischer Sicht in der Materialauswahl eingeschränkt. Bei Leitungsrohren aus Edelstahl kommen dabei aus vorgenannten Gründen Rückhaltemittel ebenfalls nur aus Edelstahl in Frage, was hohe Herstellkosten verursacht.

Aus vorgenannten Gründen haben sich deshalb derartige Rückhaltemittel bislang am Markt nicht durchsetzten können, so dass man als Kompromiss die für die Verhinderung der Rückbewegung notwendige Haltekraft in das Dichtelement verlagert hat. Hierbei besitzt der Dichtring einen in Bezug auf den Rohraußendurchmesser kleineren Innnendurchmesser, so dass sich eine Überdeckung ergibt. Beim Einschieben des Rohres in den Fitting wird dann über die elastischen Rückstellkräfte des Dichtringes eine Haltekraft auf die Rohroberfläche übertragen und dadurch eine axiale Rückbewegung des Rohres oder des Fittings während der Montage weitgehend verhindert.

Nachteilig ist hierbei, dass diese Überdeckung das exakte Einführen des Rohres in den Fitting behindert und dass bei ungeschickter Handhabung diese Behinderung so groß sein, kann, dass der Dichtring beschädigt oder sogar zerstört wird.

Aus der DE 10 2004 016 327 A1 ist eine Rohrverbindung nach dem Oberbegriff des Anspruchs 1 bekannt.

Aufgabe der Erfindung ist es, eine Rohrverbindung, bestehend aus einem metallischen Pressfitting, einem einschiebbaren metallischen Leitungsrohr und einem die axiale Rückbewegung des Leitungsrohres verhindernden Mittel der gattungsgemäßen Art anzugeben, bei der das Rückhaltemittel kostengünstig in der Herstellung, auf einfache Weise montierbar ist und beim Einführen des Leitungsrohres in den Fitting eine Beschädigung des Dichtringes ausgeschlossen werden kann. Darüber hinaus soll dem Installateur auf einfache Weise der Original- bzw Neuzustand des Pressfittings angezeigt werden.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung ist das Rückhaltemittel an der einschubseitigen Stirnseite des Pressfittings angeordnet. Das Rückhaltemittel ist vorzugsweise als aus elastischem Material bestehendes ringförmiges Klemmelement ausgebildet mit einer zentrischen Öffnung, deren Innendurchmesser mindestens partiell kleiner ist als der Außendurchmesser des einzuschiebenden Leitungsrohrs.

Die sich hieraus ergebende Überdeckung wird dann beim Einschieben zu einer die Rückbewegung des Leitungsrohres weitgehend verhindernden Klemmung genutzt. Im Folgenden wird diese Überdeckung als Klemmlippe bezeichnet.

Der Kern der Erfindung ist zum Einen darin zu sehen, dass man die bisher vorgeschlagene Anordnung des Rückhaltemittels im Einschubbereich des Pressfittings durch eine stirnseitige Anordnung ersetzt. Dies hat den Vorteil, dass durch diese Anordnung eine wesentlich einfachere Montage als bei den bekannten Rückhaltemitteln ermöglicht wird. Das ringförmige Klemmelement kann dabei auf einfache Weise entweder durch eine stirnseitige Verklebung oder durch eine Steckverbindung mit dem Pressfitting bzw. einer Kombination aus beiden verbunden werden. Hierzu weist das Klemmelement einen sich axial erstreckenden Ringabschnitt auf, der auf das stirnseitige Ende des zylindrischen Abschnittes klemmend aufgesteckt werden kann.

Die erfindungsgemäße Ausbildung als ringförmiges Klemmelement kann darüber hinaus sehr einfach und damit kostengünstig hergestellt werden. Außerdem ist eine Beschädigung des Dichtringes im Pressfitting beim Einführen des Rohres auszuschließen, da der Dichtring bei der Montage der Rohrverbindung keine Haltefunktion mehr ausüben muss.

Als Material für das ringförmige Klemmelement kommen alle Materialien in Frage, die eine elastische Klemmung bei einer Rückbewegung des Leitungsrohres ermöglichen. Als vorteilhaft haben sich Kunststoffe oder auch Metalle herausgestellt.

Soll aus Qualitätssicherungsgründen die Funktion "unverpresst undicht" der Rohrverbindung erhalten bleiben, darf die Klemmlippe des ringförmigen Klemmelementes das Leitungsrohr nach dem Einschieben nicht abdichtend umschließen.

Erfindungsgemäß ist deshalb nach einem weiteren Merkmal der Erfindung die Klemmlippe am inneren Umfang mit Ausnehmungen versehen, die bei einer unverpressten im Betrieb befindlichen Rohrverbindung Zwangsleckagestellen bilden.

Erfindungsgemäß ist das ringförmige Klemmelement im Auslieferungszustand des Pressfittings durch eine entfernbare Membran verschlossen. Der Verschluss zeigt dem Installateur den Original- bzw. Neuzustand des Pressfittings an. Bei Pressfittins für Wasserleitungsrohre kann der Verschluss vorteilhaft auch als Hygieneversiegelung dienen.

Bei einer ersten Ausführungsform ist die Membran als verlorener Verschluss ausgebildet, d. h. nicht wieder einsetzbar. Hierzu ist die Membran über eine Sollbruchstelle mit dem ringförmigen Klemmelement verbunden und kann durch einfaches Abreißen vom Ring getrennt werden. Nach Entfernen der Membran verbleibt der das ringförmige Klemmelement bildende torusförmige Teil am Pressfitting und bildet die Klemmlippe, die eine Rückbewegung des Leitungsrohres weitgehend verhindert.

In einer zweiten vorteilhaften Ausführungsform ist die Membran als in das ringförmige Klemmelement wieder einsetzbares Teil ausgebildet. Diese Variante bietet den Vorteil, dass der Fitting geöffnet und wieder verschlossen werden kann, um z. B. den Dichtring zu wechseln, wenn sich der Einsatzbereich des Pressfittings ändert. Die Membran kann hierbei form-, kraft- oder stoffschlüssig mit dem ringförmigen Klemmelement verbunden werden.

Je nach Ausbildung des Pressfittings mit nur einem der Einschubseite abgewandten zylindrischen Abschnitt oder beidseitig zum Ringwulst angeordneten zylindrischen Abschnitten ist auch das Klemmelement unterschiedlich ausgebildet.

Im Fall nur eines der Einschubseite abgewandten zylindrischen Abschnittes weist das ringförmige Klemmelement zur Erleichterung der Klebemontage einen zur Einschubseite des Pressfittings zugewandten zylindrisch ausgebildeten Führungsabschnitt auf, dessen Außendurchmesser höchstens so groß ist, wie der Innendurchmesser der Öffnung im stirnseitigen Einschubbereich des Ringwulstes, so dass die radial zur Innenseite weisende Stirnkante des Wulstes als Führung für das ringförmige Klemmelement dient.

Die axiale Erstreckung des Führungsabschnittes ist dabei höchstens so groß wie die Wanddicke der radial zur Innenseite weisenden Stirnkante des Wulstes, um einen Kontakt mit dem Dichtring und dem zu transportierenden Medium zu vermeiden.

In einer weiter verbesserten Ausgestaltung der Erfindung kann der Führungsabschnitt des ringförmigen Klemmelementes vorteilhaft auch für eine Steck- oder Clipsverbindung genutzt werden.

Hierzu weist das ringförmige Klemmelement in einer ersten Ausführungsform einen zylindrisch ausgebildeten Führungsabschnitt auf, dessen Außendurchmesser mindestens so groß ist wie der Innendurchmesser der stirnseitigen Öffnung des Pressfittings im Einschubbereich, wobei die sich radial gegenüber liegenden Flächen des ringförmigen Klemmelementes und der Stirnkante des Ringwulstes nach dem Einstecken klemmend miteinander verbunden sind.

In einer zweiten Ausführungsform ist der zylindrisch ausgebildete Führungsabschnitt des ringförmigen Klemmelementes mit einer Nase versehen, die die radial zur Innenseite weisende Stirnkante des Ringwulstes umgreift. Vorteilhaft ist dabei die Umgreifung als Clipsverbindung ausgeführt.

In einer weiteren Ausgestaltung der Erfindung weist das ringförmige Klemmelement einen den Ringwulst des Pressfittings umgreifenden Abschnitt auf, der alternativ durch Kleben oder ebenfalls durch Verclipsen mit dem Ringwulst des Pressfittings verbunden ist.

Im Falle beidseitig zum Ringwulst angeordneter zylindrischer Abschnitte, kann das Klemmelement vorteilhaft durch Kleben mit der einschubseitigen Stirnseite des Pressfittings verbunden werden.

Alternativ kann das Klemmelement aber auch steckbar ausgebildet sein, wahlweise in Kombination mit Kleben. Hierzu weist das Klemmelement einen sich axial erstreckenden Ringabschnitt auf, der auf das stirnseitige Ende des zylindrischen Abschnittes vorteilhaft klemmend aufgesteckt werden kann.

In einer weiteren vorteilhaften Ausgestaltung ist das Klemmelement ebenfalls stirnseitig klemmend aufgesteckt jedoch mit einem in den zylindrischen Abschnitt eingreifenden Zentrierabschnitt.

Weitere Merkmale, Vorteile und Einzelheiten der Erfindung ergeben sich aus der nachfolgenden Beschreibung von in einer Zeichnung dargestellten Ausführungsbeispielen.

Es zeigen:
- **Figur 1a, b, c**: halbseitiger Teillängsschnitt einer ersten Variante der erfindungsgemäßen Rohrverbindung,
- **Figur 2a, b**: Ausführungsformen der Klemmlippe,
- **Figur 3a, b, c**: Befestigungsmöglichkeiten des ringförmigen Klemmelementes am Pressfitting,
- **Figur 4a, b, c**: Verschlussmöglichkeiten des ringförmigen Klemmelementes durch eine Membran,
- **Figur 5a, b, c**: halbseitiger Teillängsschnitt einer zweiten Variante der erfindungsgemäßen Rohrverbindung.

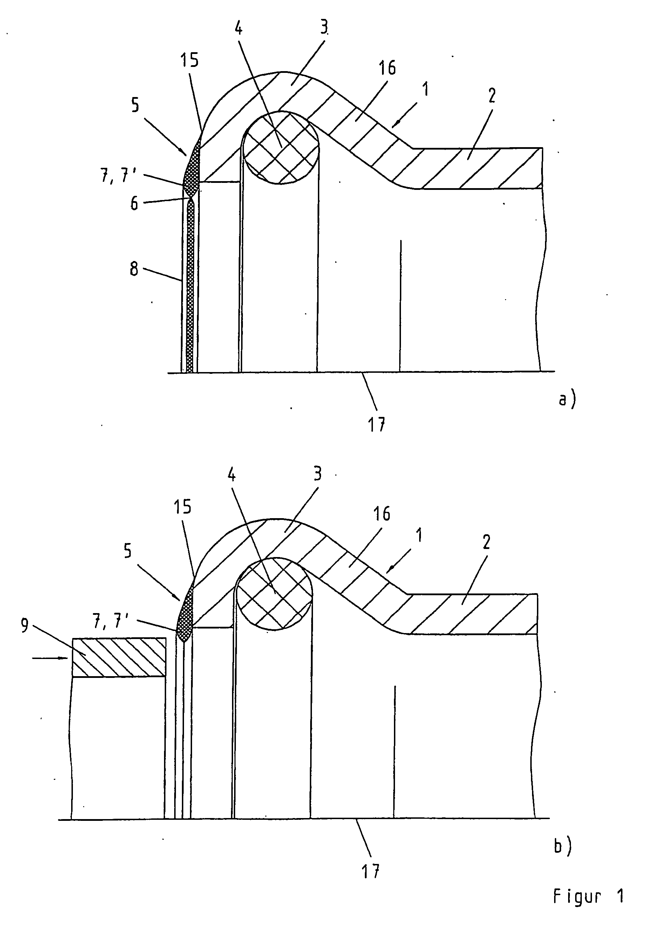

**Figur 1a** zeigt in einem halbseitigen Längsschnitt eine erfindungsgemäß ausgestaltete Rohrverbindung vor dem Einschieben des Leitungsrohres.
Die Rohrverbindung besteht aus einem Pressfitting 1, der am offenen Ende einen ringförmigen, sich nach außen erstreckenden Ringwulst 3 aufweist, in dem ein Dichtring 4 angeordnet ist.

Einschubseitig geht der Ringwulst 3 über in einen stirnseitigen Bereich 15, der nahezu senkrecht auf der Längsachse 17 des Pressfittings 1 steht.

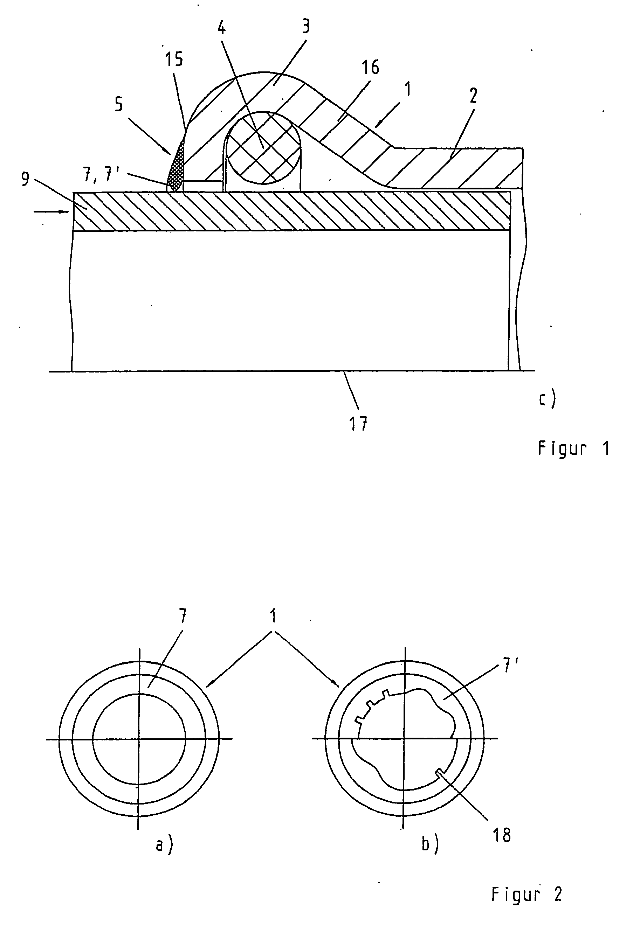

In Einschubrichtung gesehen schließt sich an den Ringwulst 3 nach einem schräg abfallenden Abschnitt 16 ein zylindrischer Abschnitt 2 an, bis zu dem das in **Figur 1b** **und c** dargestellte Leitungsrohr 9 eingeschoben werden kann. Hier nicht dargestellt ist ein sich nach innen erstreckender Absatz im zylindrischen Abschnitt 2, bis zu dem das Leitungsrohr 9 eingeschoben werden kann.

Erfindungsgemäß ist stirnseitig am Pressfitting 1 ein Rückhaltemittel in Form eines ringförmigen Klemmelementes 5 ortsfest angeordnet und mit dem stirnseitigen Bereich 15 des Pressfittings 1 verklebt.

Damit das ringförmige Klemmelement 5 seine Funktion als Rückhaltemittel für das eingeschobene Leitungsrohr 9 ausüben kann, ist der Innendurchmesser der zentrischen Öffnung kleiner ausgebildet als der Außendurchmesser des einzuschiebenden Leitungsrohres 9.

Die sich hieraus ergebende Überdeckung wird beim Einschieben zu einer die Rückbewegung des Leitungsrohres 9 weitgehend verhindernden elastischen Klemmung genutzt. Hierbei erzeugt das Rückstellverhalten des verwendeten elastischen Materials die zum Halten des Pressfittings 1 am Leitungsrohr 9 notwendige Haltekraft. Diese Überdeckung ist als Klemmlippe 7 mit gleichmäßigem Innendurchmesser oder als Klemmlippe 7', deren Innendurchmesser mindestens partiell kleiner ist als der Außendurchmesser des einzuschiebenden Leitungsrohres 9, ausgebildet (**Figur 2a****, b**).

Da so die Rückhaltefunktion vom Dichtring 4 auf das ringförmige Klemmelement 5 übertragen wird, kann der Innendurchmesser des Dichtringes 4 jetzt größer sein als der Außendurchmesser des Leitungsrohres 9, wodurch eine Beschädigung beim Einführen des Leitungsrohres 9 verhindert wird.

Im vorliegenden Beispiel ist die Öffnung des ringförmigen Klemmelementes 5 erfindungsgemäß durch eine Membran 8 verschlossen. Die Membran 8 ist über eine Sollbruchstelle 6 mit dem ringförmigen Klemmelement 5 verbunden und wird vor dem Einführen des Leitungsrohres 9 in den Pressfitting 1 mittels eines hier nicht dargestellten Hebels entfernt.

In **Figur 1b** ist der Zustand unmittelbar vor dem Einführen des Leitungsrohres 9 in den Pressfitting 1 nach dem Entfernen der Membran 8 dargestellt.

**Figur 1c** zeigt die Rohrverbindung im eingeschobenen aber noch unverpressten Zustand. Über die elastische Klemmung der Klemmlippe 7, 7' des ringförmigen Klemmelementes 5 wird das Leitungsrohr 9 an einer nicht beabsichtigten Rückbewegung gehindert.

In **Figur 1** ist beispielsweise der Innendurchmesser der Klemmlippe 7 gleichmäßig kleiner ausgebildet als der Außendurchmesser des einzuschiebenden Leitungsrohres 9. Danach liegt die Klemmlippe 7 über den Gesamtumfang am Leitungsrohr 9 an. Bei einem Kundenwunsch nach einer unverpresst undichten Verbindung wird gemäß **Figur 2b** die Dichtlippe 7' des Pressfittings 1 am Innenumfang mit Ausnehmungen 18 versehen, die unterschiedlich für die zu erreichende Klemmung ausgebildet sein können. Beispielsweise kommen wellenförmige oder gezahnte Ausnehmungen in Frage.

**Figur 2** zeigt verschiedene Ausführungsformen der Klemmlippe 7, 7'.

In **Figur 2a** ist der Innendurchmesser der Klemmlippe 7 gleichmäßig kleiner ausgebildet, als der Außendurchmesser des Leitungsrohres 9, so dass diese das Leitungsrohr 9 nach dem Einschieben in den Pressfitting 1 abdichtend umschließt.

**Figur 2b** zeigt die Klemmlippe 7' mit Ausnehmungen 18 am Innenumfang um den Zustand "unverpresst undicht" zu realisieren.

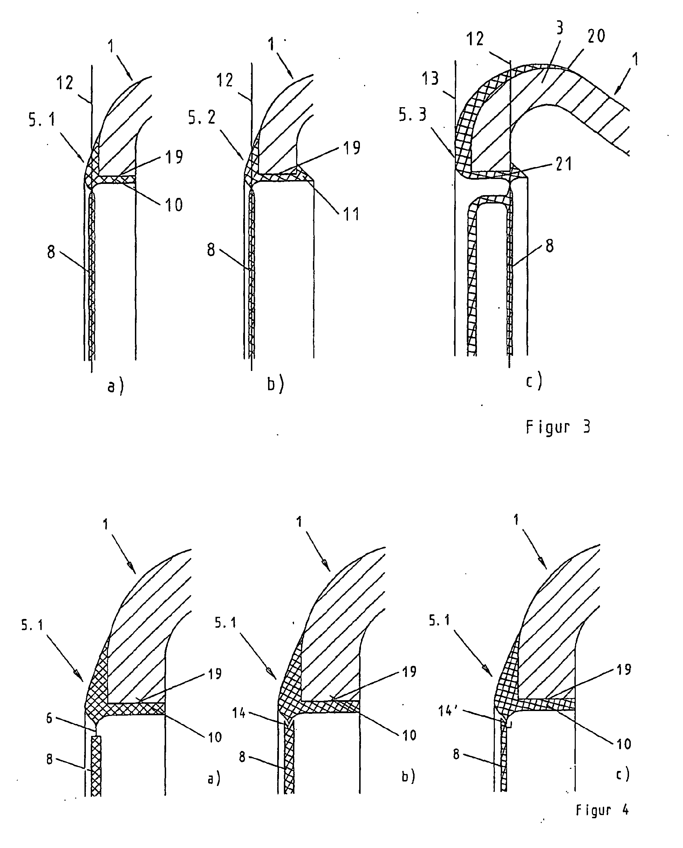

**Figur 3** zeigt unterschiedliche Befestigungsmöglichkeiten des ringförmigen Klemmelementes 5, 5.1, 5.2, 5.3 am Pressfitting 1.

Zur Erleichterung der Klebemontage weist das ringförmige Klemmelement 5.1 nach **Figur 3a** einen in Einschubrichtung weisenden Führungsabschnitt 10 auf, dessen axiale Erstreckung der Wanddicke des Pressfittings 1 an der Stirnkante 19 entspricht. Wichtig ist, dass diese axiale Erstreckung nicht in den Abdichtbereich des Dichtringes 4 hineinragt und ein Kontakt mit dem zu transportierenden Medium im Gebrauch vermieden wird.

Zur einfachen Montage ist es ebenfalls wichtig, dass der Außendurchmesser des Führungsabschnittes 10 höchstens so groß ist wie der Innendurchmesser der Öffnung im stirnseitigen Einschubbereich des Ringwulstes 3.

Ist der Außendurchmesser des Führungsabschnittes 10 geringfügig größer als der Innendurchmesser der Öffnung im stirnseitigen Einschubbereich des Ringwulstes 3, kann das ringförmige Klemmelement 5.1 auch sich verklemmend mit der Stirnkante 19 des Ringwulstes 3 eingesetzt werden, so dass auf eine zusätzliche Verklebung verzichtet werden kann.

**Figur 3b** zeigt eine ähnliche Ausführungsform wie **Figur 3a**, jedoch weist hier der Führungsabschnitt 10 eine die Stirnkante 19 umgreifenden Nase 11 auf, wodurch das ringförmige Klemmelement 5.2 formschlüssig mit dem Pressfitting 1 verbunden werden kann.

In **Figur 3c** ist eine alternative Ausführungsform dargestellt, bei der das ringförmige Klemmelement 5.3 mit einem den Ringwulst 3 des Pressfittings 1 umgreifenden Abschnitt 20 versehen ist.

Vorteil bei den Ausführungsformen nach **Figur 3** ist, dass die Klemmebene 12 hinter die Frontebene 13 des Pressfittings 1 gelegt werden kann, um wie in **Figur 3c** dargestellt den Zentrierabschnitt 21 vor der Klemmebene 12 zur Führung des Leitungsrohres 9 zu nutzen.

In der entstehenden Vertiefung relativ zur Frontebene 13 des Pressfittings 1 können vorteilhaft auch vorstehende Teile, wie der zum Entfernen der Membran 8 erforderliche Hebel, untergebracht werden, so dass diese vor einer unbeabsichtigten Betätigung geschützt sind.

Für den Fall, dass das ringförmige Klemmelement vor dem Einführen des Leitungsrohres durch eine Membran geschützt werden soll, sind in **Figur 4** verschiedene Befestigungsmöglichkeiten dargestellt, um eine Membran hier am Beispiel des ringförmigen Klemmelementes 5.1 zu befestigen.

Die Membran 8 des ringförmigen Klemmelementes 5.1 ist entsprechend **Figur 4a** über eine Sollbruchstelle 6 verbunden und wird vor der Einführung des hier nicht dargestellten Leitungsrohres in den Pressfitting 1 über einen ebenfalls hier nicht dargestellten Hebel entfernt.

In **Figur 4b** **und c** sind Ausführungsformen dargestellt, bei denen die Membran 8 über formschlüssige Verbindungen 14, 14' mit dem ringförmigen Klemmelement 5.1 wieder verbunden werden kann.

Diese Varianten bieten den Vorteil, dass der Pressfitting 1 geöffnet und wieder verschlossen werden kann, um z.B. den Dichtring 4 für ein anderes Anwendungsgebiet zu wechseln. Die formschlüssige Verbindung kann beispielsweise durch Einrasten (**Figur 4b**) oder Einhaken (**Figur 4c**) erfolgen. Wahlweise kann diese Verbindung auch stoff- oder kraftschlüssig ausgebildet sein.

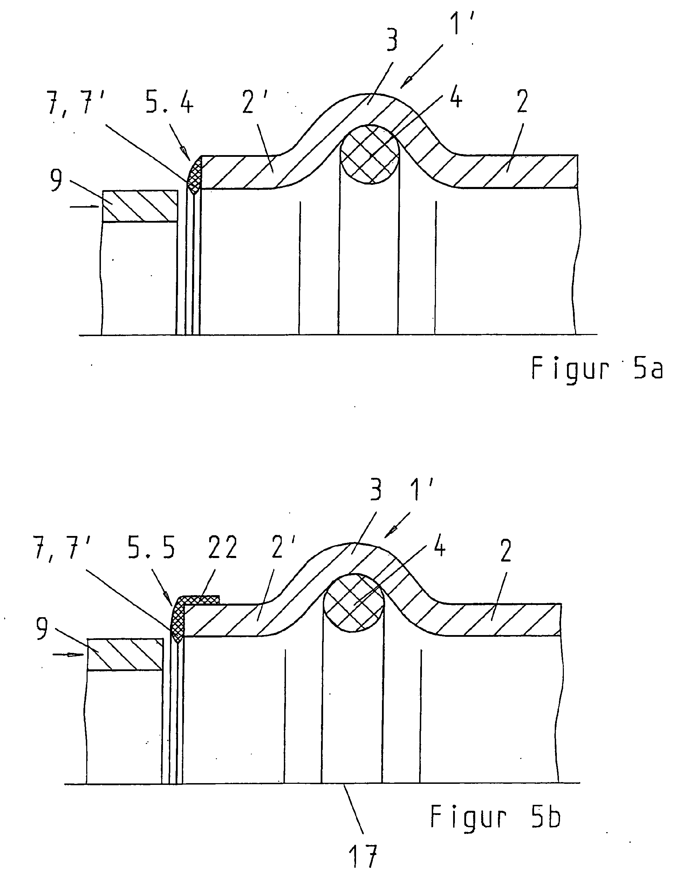

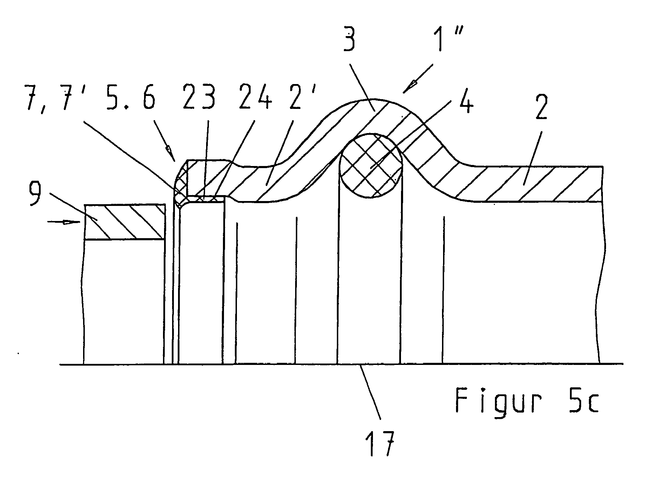

**Figur 5** zeigt in einem halbseitigen Teillängsschnitt eine zweite Variante der erfindungsgemäßen Rohrverbindung. Bei dem hier dargestellten Pressfittingtyp 1' schließt sich an den Ringwulst 3 sowohl zur medienzugewandten wie auch zur medienabgewandten Seite ein zylindrisch ausgebildeter Abschnitt 2 bzw. 2' an.

In der in **Figur 5a** dargestellten ersten Ausführungsform ist das Klemmelement 5.4 mit der Klemmlippe 7, 7' an der einschubseitigen Stirnseite des zylindrischen Abschnittes 2' z.B. durch Verkleben fest angeordnet und erfüllt mit den zur **Figur 1** beschrieben Ausgestaltungen die gleichen dort beschriebenen Funktionen.

In **Figur 5b** ist in einer alternativen Ausgestaltung der Pressfitting 1' mit einem stirnseitig am zylindrischen Abschnitt 2' angeordneten Klemmelement 5.5 dargestellt. Um die Montage des Klemmelementes 5.5 am Pressfitting 1' zu erleichtern, geht die Klemmlippe 7, 7' in einen den Endbereich des zylindrischen Abschnittes 2' klemmend umgreifenden Ringabschnitt 22 über.

**Figur 5c** zeigt in einer weiteren Ausgestaltung einen Pressfitting 1" mit einem ebenfalls stirnseitig aufgesteckten Klemmelement 5.6. Im Unterschied zum Klemmelement 5.5 **(****Figur 5b**) ist das Klemmelement 5.6 mit einem in den zylindrischen Abschnitt 2' eingreifenden Zentrierabschnitt 23 versehen, der das Klemmelement 5.6 automatisch im Pressfitting 1" zentriert.

Der Durchmesser des zylindrischen Abschnittes 2' ist im Eingriffsbereich 24 des Zentrierabschnitts 23 entsprechend der zweifachen Wanddicke des Zentrierabschnittes 23 vergrößert, so dass nach der Montage der Innendurchmesser des Klemmelementes 5.6 mit dem Innendurchmesser des zylindrischen Abschnittes 2' außerhalb des Eingriffsbereiches 24 fluchtet. Dies erleichtert das zentrierte Einschieben des Leitungsrohres 9 und verringert die Gefahr einer Verletzung des Dichtelementes 4 beim Einschieben des Leitungsrohres 9.

In **Figur 5** nicht dargestellt ist der Fall, dass das Klemmelement 5.4 und 5.5 durch eine Membran verschlossen ist. Entsprechend den Ausführungen zu **Figur 1** ist dies jedoch ebenfalls möglich.

**Bezugszeichenliste**

| **Nr.** | **Bezeichnung** |
|---|---|
| 1, 1', 1" | Pressfitting |
| 2, 2' | zylindrischer Abschnitt |
| 3 | Ringwulst |
| 4 | Dichtring |
| 5, 5.1, 5.2, 5.3, 5.4, 5.5, 5.6 | ringförmiges Klemmelement |
| 6 | Sollbruchstelle |
| 7, 7' | Klemmlippe |
| 8 | Membran |
| 9 | Leitungsrohr |
| 10 | Führungsabschnitt |
| 11 | Nase |
| 12 | Klemmebene |
| 13 | Frontebene Fitting |
| 14, 14' | formschlüssige Verbindung |
| 15 | stirnseitiger Bereich |
| 16 | schräger Abschnitt |
| 17 | Längsachse Pressfitting |
| 18 | Ausnehmungen |
| 19 | radiale Stirnkante |
| 20 | umgreifender Abschnitt |
| 21 | Zentrierabschnitt |
| 22 | Ringabschnitt |
| 23 | Zentrierabschnitt |
| 24 | Eingriffsbereich |

## Patentansprüche

1. Rohrverbindung bestehend aus einem metallischen Pressfitting (1, 1', 1"), der mindestens einen im Querschnitt wulstartig ausgebildeten, einen Dichtring (4) aufnehmenden Abschnitt (3) und einen daran anschließenden, der Einschubseite zugewandten (2') und/oder der Einschubseite abgewandten zylindrisch ausgebildeten Abschnitt (2) aufweist und einem metallischen Leitungsrohr (9), dessen glatt ausgebildeter Endbereich bis in den zylindrischen Abschnitt (2) eingeschoben ist und mittels eines mindestens zwei Pressbacken aufweisenden Presswerkzeuges nach dessen Schließen durch Einwirkung auf den Pressfitting (1, 1', 1") und das Leitungsrohr (9) eine unlösbare dichte Rohrverbindung gebildet wird und der Pressfitting (1, 1', 1") ein die axiale Rückbewegung des eingeschobenen Leitungsrohres (9) verhinderndes Mittel aufweist, wobei
das Rückhaltemittel an der einschubseitigen Stirnseite (15) des Pressfittings ortsfest angeordnet und als ringförmiges Klemmelement (5, 5.1, 5.2, 5.3, 5.4, 5.5, 5.6) ausgebildet ist mit einer als Klemmlippe (7') ausgebildeten zentrischen Öffnung, deren Innendurchmesser mindestens partiell kleiner ist als der Außendurchmesser des einzuschiebenden Leitungsrohrs (9), **dadurch gekennzeichnet, dass** das ringförmige Klemmelement (5, 5.1, 5.2, 5.3, 5.4, 5.5, 5.6) des Pressfittings (1, 1', 1 ") im unmontierten Zustand des Leitungsrohres (9) durch eine entfernbare Membran (8) verschlossen ist.

2. Rohrverbindung nach Anspruch 1
**dadurch gekennzeichnet,**
**dass** das Rückhaltemittel als ringförmiges Klemmelement (5, 5.1, 5.2, 5.3, 5.4, 5.5, 5.6) ausgebildet ist mit einer als Klemmlippe (7) ausgebildeten zentrischen Öffnung, deren Innendurchmesser gleichmäßig kleiner ist als der Außendurchmesser des einzuschiebenden Leitungsrohrs (9).

3. Rohrverbindung nach Anspruch 1 oder 2
**dadurch gekennzeichnet,**
**dass** das ringförmige Klemmelement (5, 5.1, 5.2, 5.3, 5.4, 5.5, 5.6) aus elastischem Material besteht.

4. Rohrverbindung nach Anspruch 3
**dadurch gekennzeichnet,**
**dass** das ringförmige Klemmelement (5, 5.1, 5.2, 5.3, 5.4, 5.5, 5.6) aus Kunststoff besteht.

5. Rohrverbindung nach Anspruch 3
**dadurch gekennzeichnet,**
**dass** das ringförmige Klemmelement (5, 5.1, 5.2, 5.3, 5.4, 5.5, 5.6) aus Metall besteht.

6. Rohrverbindung nach einem der Ansprüche 1 - 5
**dadurch gekennzeichnet,**
**dass** die Membran (8) über eine Sollbruchstelle (6) mit dem ringförmigen Klemmelement (5, 5.1, 5.2, 5.3, 5.4, 5.5, 5.6) verbunden ist.

7. Rohrverbindung nach einem der Ansprüche 1 - 6
**dadurch gekennzeichnet,**
**dass** das ringförmige Klemmelement (5, 5.1, 5.2, 5.3, 5.4, 5.5, 5.6) durch Verkleben mit dem Pressfitting (1, 1', 1 ") verbunden ist.

8. Rohrverbindung nach einem der Ansprüche 1 - 7
**dadurch gekennzeichnet,**
**dass** das ringförmige Klemmelement (5.1, 5.2, 5.3) einen zur Einschubseite in den Pressfitting (1) zylindrisch ausgebildeten Führungsabschnitt (10) aufweist, dessen axiale Erstreckung mindestens so groß ist wie die Wanddicke des Pressfittings (1), aber höchstens so groß ist, dass ein Kontakt mit dem zu transportierenden Medium im Gebrauch vermieden wird, und dessen Außendurchmesser höchstens so groß ist wie der Innendurchmesser der Öffnung im stirnseitigen Einschubbereich des Ringwulstes (3).

9. Rohrverbindung nach einem der Ansprüche 1 - 8
**dadurch gekennzeichnet,**
**dass** das ringförmige Klemmelement (5.1, 5.2, 5.3, 5.5) durch Stecken mit dem Pressfitting (1) verbunden ist.

10. Rohrverbindung nach einem der Ansprüche 1 - 9
**dadurch gekennzeichnet,**
**dass** das ringförmige Klemmelement (5.1, 5.2, 5.3, 5.5, 5.6) durch Stecken in Kombination mit Kleben mit dem Pressfitting (1, 1', 1") verbunden ist.

11. Rohrverbindung nach Anspruch 9 und 10
**dadurch gekennzeichnet,**
**dass** das ringförmige Klemmelement (5.1, 5.2, 5.3) einen zur Einschubseite in den Pressfitting (1) zylindrisch ausgebildeten Führungsabschnitt (10) aufweist, dessen axiale Erstreckung mindestens so groß ist wie die Wanddicke des Pressfittings (1) aber höchstens so groß ist, dass ein Kontakt mit dem zu transportierenden Medium im Gebrauch vermieden wird, dessen Außendurchmesser mindestens so groß ist wie der Innendurchmesser der Öffnung im stirnseitigen Einschubbereich des Ringwulstes (3) und dass die nach dem Einstecken sich radial gegenüberliegenden Flächen des Führungsabschnittes (10) des ringförmigen Klemmelementes (5.1, 5.2, 5.3) und der Stirnkante (19) des Ringwulstes (3) klemmend miteinander verbunden sind.

12. Rohrverbindung nach Anspruch 11
**dadurch gekennzeichnet,**
**dass** der zylindrisch ausgebildete Führungsabschnitt (10) des ringförmigen Klemmelementes (5.2) mit einer die Stirnkante (19) des Ringwulstes (3) umgreifenden Nase (11) versehen ist.

13. Rohrverbindung nach einem der Ansprüche 1 - 12
**dadurch gekennzeichnet,**
**dass** das ringförmige Klemmelement (5.3) einen den Ringwulst (3) des Pressfittings (1) umgreifenden Abschnitt (20) aufweist.

14. Rohrverbindung nach Anspruch 13
**dadurch gekennzeichnet,**
**dass** der umgreifende Abschnitt (20) durch Verclipsen mit dem Ringwulst (3) verbunden ist.

15. Rohrverbindung nach Anspruch 13
**dadurch gekennzeichnet,**
**dass** der umgreifende Abschnitt (20) durch Kleben mit dem Ringwulst (3) verbunden ist.

16. Rohrverbindung nach einem der Ansprüche 8 - 15
**dadurch gekennzeichnet,**
**dass** sich die Klemmebene (12) des ringförmigen Klemmelementes (5.1, 5.2, 5.3) vor oder im Bereich der radial zur Innenseite weisenden Stirnkante (19) des Ringwulstes (3) befindet.

17. Rohrverbindung nach Anspruch 16
**dadurch gekennzeichnet,**
**dass** das ringförmige Klemmelement (5.3) zur Einschubseite des Leitungsrohres (9) hin mit einem zylindrischen, zum zentrierten Einführen des Leitungsrohres (9) geeigneten Abschnitt (21) versehen ist.

18. Rohrverbindung nach einem der Ansprüche 1 - 17
**dadurch gekennzeichnet,**
**dass** die Membran (8) im ringförmigen Klemmelement (5, 5.1, 5.2, 5.3, 5.4, 5.5, 5.6) wieder einsetzbar ausgebildet ist.

19. Rohrverbindung nach Anspruch 18
**dadurch gekennzeichnet,**
**dass** die Membran (8) form- kraft- oder stoffschlüssig mit dem ringförmigen Klemmelement (5, 5.1, 5.2, 5.3, 5.4, 5.5, 5.6) verbindbar ist.

20. Rohrverbindung nach einem der Ansprüche 1 - 7
**dadurch gekennzeichnet,**
**dass** das ringförmige Klemmelement (5.5) einen den Endbereich des zylindrischen Abschnittes (2') des Pressfittings (1') klemmend umgreifenden Ringabschnitt (22) aufweist.

21. Rohrverbindung nach Anspruch 20
**dadurch gekennzeichnet,**
**dass** das Klemmelement (5.5) zusätzlich durch Kleben mit dem Pressfitting (1') verbunden ist.

22. Rohrverbindung nach einem der Ansprüche 1 - 7
**dadurch gekennzeichnet,**
**dass** das ringförmige Klemmelement (5.6) mit einem in den zylindrischen Abschnitt (2') des Pressfittings (1', 1 ") eingreifenden Zentrierabschnitt (23) versehen ist.

23. Rohrverbindung nach Anspruch 22
**dadurch gekennzeichnet,**
**dass** der Innendurchmesser des Zentrierabschnittes (23) dem Innendurchmesser des zylindrischen Abschnittes (2') des Pressfittings (1") entspricht.

## Claims

1. Pipe connection comprising a metallic press fitting (1, 1', 1 "), which has at least one section (3) of bead-like form in cross-section and accommodating a sealing ring (4), and an adjoining cylindrically shaped section (2) directed towards (2') the insertion side and/or away from the insertion side, and a metallic conduit pipe (9), the smoothly formed end region of which is inserted as far as into the cylindrical section (2) and a non-detachable leaktight pipe connection is formed by action on the press fitting (1, 1', 1 ") and the conduit pipe (9) by means of a pressing tool having at least two pressing jaws after closure of the tool, and the press fitting (1, 1', 1 ") has a means preventing the axial backward movement of the inserted conduit pipe (9), the retaining means being stationarily arranged on the insertion-side front end (15) of the press fitting and being formed as an annular clamping element (5, 5.1, 5.2, 5.3, 5.4, 5.5, 5.6) having a central opening which is formed as a clamping lip (7') and the inside diameter of which is at least partially smaller than the outside diameter of the conduit pipe (9) to be inserted, **characterised in that** the annular clamping element (5, 5.1, 5.2, 5.3, 5.4, 5.5, 5.6) of the press fitting (1, 1', 1") is closed by a removable membrane (8) in the uninstalled state of the conduit pipe (9).

2. Pipe connection according to Claim 1,
**characterised**
**in that** the retaining means is formed as an annular clamping element (5, 5.1, 5.2, 5.3, 5.4, 5.5, 5.6) having a central opening which is formed as a clamping lip (7) and the inside diameter of which is uniformly smaller than the outside diameter of the conduit pipe (9) to be inserted.

3. Pipe connection according to Claim 1 or 2,
**characterised**
**in that** the annular clamping element (5, 5.1, 5.2, 5.3, 5.4, 5.5, 5.6) is made of elastic material.

4. Pipe connection according to Claim 3,
**characterised**
**in that** the annular clamping element (5, 5.1, 5.2, 5.3, 5.4, 5.5, 5.6) is made of plastic.

5. Pipe connection according to Claim 3,
**characterised**
**in that** the annular clamping element (5, 5.1, 5.2, 5.3, 5.4, 5.5, 5.6) is made of metal.

6. Pipe connection according to one of Claims 1 - 5,
**characterised**
**in that** the membrane (8) is connected to the annular clamping element (5, 5.1, 5.2, 5.3, 5.4, 5.5, 5.6) via a predetermined breaking point (6).

7. Pipe connection according to one of Claims 1 - 6,
**characterised**
**in that** the annular clamping element (5, 5.1, 5.2, 5.3, 5.4, 5.5, 5.6) is connected to the press fitting (1, 1', 1") by adhesive bonding.

8. Pipe connection according to one of Claims 1 - 7,
**characterised**
**in that** the annular clamping element (5.1, 5.2, 5.3) has a cylindrically shaped guiding section (10) which is directed towards the insertion side into the press fitting (1) and the axial extent of which is at least as great as the wall thickness of the press fitting (1), but at most so great that a contact with the medium to be transported in use is avoided, and the outside diameter of which is at most as great as the inside diameter of the opening in the front-end insertion region of the annular bead (3).

9. Pipe connection according to one of Claims 1 - 8,
**characterised**
**in that** the annular clamping element (5.1, 5.2, 5.3, 5.5) is connected to the press fitting (1) by plugging.

10. Pipe connection according to one of Claims 1 - 9,
**characterised**
**in that** the annular clamping element (5.1, 5.2, 5.3, 5.5, 5.6) is connected to the press fitting (1, 1', 1") by plugging in combination with adhesive bonding.

11. Pipe connection according to Claim 9 and 10,
**characterised**
**in that** the annular clamping element (5.1, 5.2, 5.3) has a cylindrically shaped guiding section (10) which is directed towards the insertion side into the press fitting (1) and the axial extent of which is at least as great as the wall thickness of the press fitting (1), but at most so great that a contact with the medium to be transported in use is avoided, and the outside diameter of which is at least as great as the inside diameter of the opening in the front-end insertion region of the annular bead (3), and in that the surfaces, lying radially opposite one another after the plugging-in, of the guiding section (10) of the annular clamping element (5.1, 5.2, 5.3) and of the front edge (19) of the annular bead (3) are connected to one another in a clamping manner.

12. Pipe connection according to Claim 11,
**characterised**
**in that** the cylindrically shaped guiding section (10) of the annular clamping element (5.2) is provided with a lug (11) embracing the front edge (19) of the annular bead (3).

13. Pipe connection according to one of Claims 1 - 12,
**characterised**
**in that** the annular clamping element (5.3) has a section (20) embracing the annular bead (3) of the press fitting (1).

14. Pipe connection according to Claim 13,
**characterised**
**in that** the embracing section (20) is connected to the annular bead (3) by clipping.

15. Pipe connection according to Claim 13,
**characterised**
**in that** the embracing section (20) is connected to the annular bead (3) by adhesive bonding.

16. Pipe connection according to one of Claims 8 - 15,
**characterised**
**in that** the clamping plane (12) of the annular clamping element (5.1, 5.2, 5.3) is situated in front of or in the region of the front edge (19), directed radially towards the inside, of the annular bead (3).

17. Pipe connection according to Claim 16,
**characterised**
**in that** the annular clamping element (5.3) is provided, directed towards the insertion side of the conduit pipe (9), with a cylindrical section (21) suitable for the centred introduction of the conduit pipe (9).

18. Pipe connection according to one of Claims 1 - 17,
**characterised**
**in that** the membrane (8) in the annular clamping element (5, 5.1, 5.2, 5.3, 5.4, 5.5, 5.6) is of reusable design.

19. Pipe connection according to Claim 18,
**characterised**
**in that** the membrane (8) is connectable to the annular clamping element (5, 5.1, 5.2, 5.3, 5.4, 5.5, 5.6) in a positive, non-positive or materially bonded manner.

20. Pipe connection according to one of Claims 1 - 7,
**characterised**
**in that** the annular clamping element (5.5) has an annular section (22) which embraces the end region of the cylindrical section (2') of the press fitting (1') in a clamping manner.

21. Pipe connection according to Claim 20,
**characterised**
**in that** the clamping element (5.5) is additionally connected to the press fitting (1') by adhesive bonding.

22. Pipe connection according to one of Claims 1 - 7,
**characterised**
**in that** the annular clamping element (5.6) is provided with a centring section (23) engaging in the cylindrical section (2') of the press fitting (1', 1").

23. Pipe connection according to Claim 22,
**characterised**
**in that** the inside diameter of the centring section (23) corresponds to the inside diameter of the cylindrical section (2') of the press fitting (1").

## Revendications

1. Liaison de tubes composée d'un raccord à serrage métallique (1, 1', 1 ") qui présente au moins une partie (3), réalisée en forme de bourrelet en coupe transversale, recevant une bague d'étanchéité (4) et une partie (2), réalisée cylindrique, faisant suite à la première et orientée vers le côté d'insertion (2') et/ou orientée à l'opposé du côté d'insertion et d'un tube de conduite métallique (9) dont la zone d'extrémité réalisée lisse est introduite jusque dans la partie cylindrique (2), une liaison de tubes étanche et inamovible étant formée au moyen d'un outil de serrage présentant au moins deux mâchoires de serrage, après sa fermeture, par action sur le raccord à serrage (1, 1', 1") et le tube de conduite (9), et le raccord à serrage (1, 1', 1 ") présentant un dispositif empêchant le déplacement axial vers l'arrière du tube de conduite (9) introduit, le dispositif de retenue étant agencé fixement sur la face frontale côté insertion (15) du raccord à serrage et étant réalisé sous forme d'élément de serrage annulaire (5, 5.1, 5.2, 5.3, 5.4, 5.5, 5.6) avec une ouverture centrale réalisée en tant que lèvre de serrage (7') dont le diamètre intérieur est au moins partiellement plus petit que le diamètre extérieur du tube de conduite (9) à introduire,
**caractérisée en ce que** l'élément de serrage annulaire (5, 5.1, 5.2, 5.3, 5.4, 5.5, 5.6) du raccord à serrage (1, 1', 1 ") est fermé par une membrane amovible (8) dans l'état non monté du tube de conduite (9).

2. Liaison de tubes selon la revendication 1,
**caractérisée en ce que** le dispositif de retenue est réalisé sous la forme d'un élément de serrage annulaire (5, 5.1, 5.2, 5.3, 5.4, 5.5, 5.6) avec une ouverture centrale réalisée en tant que lèvre de serrage (7) dont le diamètre intérieur est uniformément plus petit que le diamètre extérieur du tube de conduite (9) à introduire.

3. Liaison de tubes selon les revendications 1 ou 2,
**caractérisée en ce que** l'élément de serrage annulaire (5, 5.1, 5.2, 5.3, 5.4, 5.5, 5.6) est en matériau élastique.

4. Liaison de tubes selon la revendication 3,
**caractérisée en ce que** l'élément de serrage annulaire (5, 5.1, 5.2, 5.3, 5.4, 5.5, 5.6) est en matière synthétique.

5. Liaison de tubes selon la revendication 3,
**caractérisée en ce que** l'élément de serrage annulaire (5, 5.1, 5.2, 5.3, 5.4, 5.5, 5.6) est en métal.

6. Liaison de tubes selon l'une des revendications 1 à 5,
**caractérisée en ce que** la membrane (8) est reliée à l'élément de serrage annulaire (5, 5.1, 5.2, 5.3, 5.4, 5.5, 5.6) par le biais d'un point destiné à la rupture (6).

7. Liaison de tubes selon l'une des revendications 1 à 6,
**caractérisée en ce que** l'élément de serrage annulaire (5, 5.1, 5.2, 5.3, 5.4, 5.5, 5.6) est relié par collage au raccord à serrage (1, 1', 1").

8. Liaison de tubes selon l'une des revendications 1 à 7,
**caractérisée en ce que** l'élément de serrage annulaire (5.1, 5.2, 5.3) présente une partie de guidage (10) réalisée cylindrique du côté de l'insertion dans le raccord à serrage (1), dont l'étendue axiale est au moins égale à l'épaisseur de paroi du raccord à serrage (1), mais au plus égale à une étendue qui empêche un contact avec le fluide à transporter en utilisation, et dont le diamètre extérieur est au plus égal au diamètre intérieur de l'ouverture dans la zone d'insertion côté frontal du bourrelet annulaire (3).

9. Liaison de tubes selon l'une des revendications 1 à 8,
**caractérisée en ce que** l'élément de serrage annulaire (5.1, 5.2, 5.3, 5.5) est relié au raccord à serrage (1) par enfichage.

10. Liaison de tubes selon l'une des revendications 1 à 9,
**caractérisée en ce que** l'élément de serrage annulaire (5.1, 5.2, 5.3, 5.5, 5.6) est relié au raccord à serrage (1, 1', 1 ") par enfichage combiné à un collage.

11. Liaison de tubes selon les revendications 9 et 10,
**caractérisée en ce que** l'élément de serrage annulaire (5.1, 5.2, 5.3) présente une partie de guidage (10) réalisée cylindrique du côté de l'insertion dans le raccord à serrage (1), dont l'étendue axiale est au moins égale à l'épaisseur de paroi du raccord à serrage (1), mais au plus égale à une étendue qui empêche un contact avec le fluide à transporter en utilisation, dont le diamètre extérieur est au moins égal au diamètre intérieur de l'ouverture dans la zone d'insertion côté frontal du bourrelet annulaire (3) et **en ce que** les surfaces, radialement opposées après insertion, de la partie de guidage (10) de l'élément de serrage annulaire (5.1, 5.2, 5.3) et du bord frontal (19) du bourrelet annulaire (3) sont reliées entre elles par serrage.

12. Liaison de tubes selon la revendication 11,
**caractérisée en ce que** la partie de guidage (10) réalisée cylindrique de l'élément de serrage annulaire (5.2) est pourvue d'un talon (11) enveloppant le bord frontal (19) du bourrelet annulaire (3).

13. Liaison de tubes selon l'une des revendications 1 à 12,
**caractérisée en ce que** l'élément de serrage annulaire (5.3) présente une partie (20) enveloppant le bourrelet annulaire (3) du raccord à serrage (1).

14. Liaison de tubes selon la revendication 13,
**caractérisée en ce que** la partie enveloppante (20) est reliée au bourrelet annulaire (3) par clipsage.

15. Liaison de tubes selon la revendication 13,
**caractérisée en ce que** la partie enveloppante (20) est reliée au bourrelet annulaire (3) par collage.

16. Liaison de tubes selon l'une des revendications 8 à 15,
**caractérisée en ce que** le plan de serrage (12) de l'élément de serrage annulaire (5.1, 5.2, 5.3) se situe devant ou dans la zone du bord frontal (19) du bourrelet annulaire (3), tourné vers le côté intérieur dans le sens radial.

17. Liaison de tubes selon la revendication 16,
**caractérisée en ce que** l'élément de serrage annulaire (5.3) est pourvu, vers le côté d'insertion du tube de conduite (9), d'une partie (21) cylindrique adaptée pour l'insertion centrée du tube de conduite (9).

18. Liaison de tubes selon l'une des revendications 1 à 17,
**caractérisée en ce que** la membrane (8) est réalisée de manière à pouvoir être replacée dans l'élément de serrage annulaire (5, 5.1, 5.2, 5.3, 5.4, 5.5, 5.6).

19. Liaison de tubes selon la revendication 18,
**caractérisée en ce que** la membrane (8) peut être reliée à l'élément de serrage annulaire (5, 5.1, 5.2, 5.3, 5.4, 5.5, 5.6) par correspondance de forme, par adhérence ou par fusion des matières.

20. Liaison de tubes selon l'une des revendications 1 à 7,
**caractérisée en ce que** l'élément de serrage annulaire (5.5) présente une partie annulaire (22) enveloppant par serrage la zone d'extrémité de la partie cylindrique (2') du raccord à serrage (1').

21. Liaison de tubes selon la revendication 20,
**caractérisée en ce que** l'élément de serrage (5.5) est relié en plus par collage au raccord à serrage (1').

22. Liaison de tubes selon l'une des revendications 1 à 7,
**caractérisée en ce que** l'élément de serrage annulaire (5.6) est pourvu d'une partie centrale (23) entrant dans la partie cylindrique (2') du raccord à serrage (1', 1 ").

23. Liaison de tubes selon la revendication 22,
**caractérisée en ce que** le diamètre intérieur de la partie centrale (23) correspond au diamètre intérieur de la partie cylindrique (2') du raccord à serrage (1").
